# EUROPEAN PATENT SPECIFICATION

(11) **EP 1 494 544 B1**
(45) Date of publication and mention of the grant of the patent: **15.10.2008**
(21) Application number: 03708247.6
(22) Date of filing: 17.03.2003
(51) Int. Cl.: A23L 1/19, A23D 7/00, A23D 7/015

(54) **SPOONABLE WATER-CONTINUOUS ACIDIFIED FOOD PRODUCT**
AUSLÖFFELBARES WASSERKONTINUIERLICHES SAUERNAHRUNGSMITTEL
PRODUIT ALIMENTAIRE ACIDIFIE A PHASE AQUEUSE CONTINUE CUILLERABLE

(30) Priority: 17.04.2002 EP 02252704
(43) Date of publication of application: 12.01.2005
(73) Proprietor: Unilever N.V., 3013 AL Rotterdam (NL); Unilever PLC, London Greater London EC4P 4BQ (GB)
(72) Inventor: BOT, Arjen, Unilever R & D Vlaardingen, NL-3133 AT Vlaardingen (NL); FOSTER, Timothy, John, Unilever R & D Colworth, Bedford, Bedfordshire MK44 1LQ (GB); LUNDIN, Leif, Orjan, Unilever R & D Colworth, Bedford, Bedfordshire MK44 1LQ (GB); PELAN, Barbara, M. C., Unilever R &D Vlaardingen, NL-3133 AT Vlaardingen (NL); REIFFERS-MAGNANI, Christel, Unilever R & D, NL-3133 AT Vlaardingen (NL)
(74) Representative: Joppe, Hermina Laura Petronella
(86) International application number: PCT/EP2003/002750
(87) International publication number: WO 2003/086106

(56) References cited:
- EP-A- 0 540 087
- WO-A-99/51105
- US-A- 3 235 387
- US-A- 3 539 363
- US-A- 4 873 094

## Description

### Field of the invention

The invention relates to a process for preparing a spoonable acidified food product suitable for use as an acid cream alternative which cream comprises a fat phase consisting at least partly of vegetable oil or marine oil, said cream further comprising biopolymer, protein and optionally further ingredients. The invention further relates to the cream obtainable by this process.

### Background to the invention

Spoonable soured low-fat vegetable fat-based cream alternatives have been described in EP-A-540087 and US-5,372,825 which disclose creamy, cultured vegetable fat-based cream alternatives comprising 5-15% fat, up to 3.5% milk protein, the cream alternative having a pH value between 4.0 and 4.8, and the cream alternative having a spoonable texture and good taste.

The products according to EP-A-540087 comprise a thickener system to achieve the desired yield stress. Suitable thickeners are selected from the group consisting of locust bean gum, guar gum, alginate, carrageenan, microcrystalline cellulose and starches. The products are prepared in a process wherein a premix is made of fat, protein components, thickener and water or skimmed milk at 40 to 100 °C, which mix is cooled, homogenised, cooled further, cultured to pH 4-4.6 and stored at less than 15 °C.

The resulting products were found to have the desired spoonable rheology. However they are still susceptible to syneresis, which is separation of a small volume of water, upon storage at a temperature between 0 and 15 °C. Such syneresis reduces the attractiveness of the products for a consumer and is therefore less desired.

It is therefore an object of the current invention to provide a spoonable soured low-fat vegetable fat-based cream alternative, which is stable upon storage.

### Summary of the invention

It has surprisingly been found that a cream with low biopolymer phase volume, which is preferably obtained by specific process measures, fulfils this objective.

Therefore the invention relates to a process for the preparation of a spoonable, soured non-dairy cream comprising from 5 to 35 wt% fat, from 0.05 to 15 wt% protein, 0.01 to 3 wt% biopolymer, said cream product having a pH value between 4.0 and 5.8 said process comprising the steps of
(a) preparation of an aqueous premix comprising at least protein and preferably fat
(b) heating the mixture obtained in step (a)
(c) acidification to a pH from 4.0 to 5.8
(d) mixing in of a biopolymer
(e) heating the mixture obtained in step (d)
(f) cooling to a temperature below 20 °C.

In another aspect the invention relates to a spoonable soured non-dairy cream comprising a dispersed oil phase and a continuous aqueous phase said cream comprising from 5 to 35 wt% fat, said fat being either a vegetable oil or marine oil or a combination thereof; from 0.05 to 15 wt% protein in the form of a protein phase, 0.01 to 3 wt% biopolymer, said cream having a pH value between 4.0 and 5.8, wherein the cream comprises a phase separated water phase comprising a biopolymer phase and a protein phase, wherein the phase volume of the biopolymer phase is from 10 to 60 vol% on total product volume, wherein the viscosity of the bipolymer phase is from 10-20 mPa·s at a shear rate of 100 s⁻¹ determined at 40°C.

### Detailed description of the invention

The invention relates to spoonable creams. Spoonable creams display at 5 °C the following characteristics:
(a) a yield value of more than 50 Pa extrapolated from shear rates between 100 and 300 s⁻¹ (Bingham)
(b) a Bingham viscosity of less than 500 mPa.s between shear rates of 100 and 300 s⁻¹.
Yield stress and Bingham viscosities are determined utilising the Carrimed Rheometer. Measurements are performed at 5 °C using 4°-cone and plate geometry. The shear stress was increased from zero at a rate of 60 Pa/min and shear rates were measured until values in excess of 600 s⁻¹ were achieved. The measurement was then terminated. A graph of shear stress vs. shear rate was plotted and a straight line fitted to the curve between the shear rates of 100 to 300 s⁻¹. The slope of this line is the Bingham viscosity. The yield stress is determined by extrapolation of this line back to zero shear rate.

Generally the dry matter content of spoonable creams is from 15wt% to 50 wt%, more preferably from 20 to 40 wt%, most preferred from 25 to 35 wt% on total product weight.

Non-dairy creams are emulsions of a water continuous phase and a dispersed fat phase, which is essentially based on vegetable fat or marine oil. The presence of a small amount of dairy fat is tolerable e.g. when derived from ingredients that are part of the cream such as milk powders.

In the description and claims where weight% is used this is weight% on total product weight unless otherwise is indicated.

In the description and claims the terms "oil" and "fat" are used interchangeably.

Volume fractions are defined on total product volume unless otherwise is indicated.

Syneresis is defined as separation of (part of) the aqueous phase from a cream, in the form of "loose" water. The amount of syneresis is defined as the amount of water (wt% on total cream weight) that can be decanted after storage. The test to determine syneresis levels is described in the examples. Preferred products according to the invention show a syneresis of less than 10 wt%, more preferred less than 5 wt%, even more preferred less than 1 wt%.

The spoonable creams according to the invention comprise from 5 to 35 wt% fat, from 0.05 to 15 wt% protein and from 0.01 to 3 wt% of a biopolymer.

In the context of the invention protein phase is defined as the phase separated protein rich part of the water phase. In the context of the invention the products may comprise more than one protein enriched phase, which can be separated due to physical barrier or may differ in type of protein. In the below the combination of protein phases is referred to as "the" protein phase.

In the context of the invention the biopolymer phase is defined as the protein depleted part of the phase separated water phase. Depending on the composition of the water phase more than one biopolymer phase may form. For the purpose of the invention the combination of biopolymer phases is referred to as "the" biopolymer phase. In the context of the invention, the terms biopolymer and thickener are used interchangeably.

The invention relates to water continuous cream alternatives containing a dispersed oil phase.
Consistency of these products is defined in terms of the yield value and Bingham viscosity as described above.

It is well known that some aqueous compositions comprising both proteins and other biopolymers such as polysaccharides may form an inhomogeneous mixture. Gelation/network formation of the protein phase, e.g. by acidification, followed by mixing in of a biopolymer phase, results in inhomogeneous phase. For the present invention we will refer to such an inhomogeneously mixed system as a phase separated system.

It was surprisingly found that the moment, at which a biopolymer is added in the process during preparation of a cream, determines the level of syneresis and storage stability of the cream to a large extent. Therefore in the process of the invention, the biopolymer is added after network formation of the protein due to acidification of the product (step d).

Without wishing to be bound by any theory applicants believe that the above described order of addition will lead to creams wherein the biopolymer phase occupies a smaller volume, leading to a higher viscosity of the biopolymer phase and therefore to reduced syneresis compared to products prepared according to another process such as that described in EP-A-540087. It is believed that the biopolymer is able to bind this water such that syneresis is reduced. The underlying reason for this is believed to be found in the presence of a separate protein phase and a separate biopolymer phase and especially in the relative volumes of the separate protein phase and the separate biopolymer phase in the products according to the invention.

The mixing in of the biopolymer in step (d) is preferably at a temperature above the gelation temperature of the polymer.

The products according to the invention comprise a phase separated water phase comprising a biopolymer phase and a protein phase. Without wishing to be bound by any theory it is believed that the protein is present in the form of an acidified protein network containing protein coated fat droplets, which are the dispersed phase. The biopolymer phase is separately present and preferably forms the remainder of the aqueous phase.

In a preferred embodiment, the biopolymer is selected from the group comprising carrageenan, gellan, alginate, tara gum, guar gum, locust bean gum, methylcellulose, pectin, xanthan gum or a combination thereof.

In the context of the invention, ungelatinised, crosslinked starch is not included in the definition of biopolymer. These compounds may be added at any stage of the process.

Furthermore proteins (other than impurities contained in the biopolymer sources) are not included in the definition of biopolymer.

The fat is preferably added in step (a) as part of the premix.

To obtain a cream with the desired dispersed fat phase properties such as particle size, it is preferred that one or more homogenisation steps are included in the process. In a preferred process after step (a) or (b) the obtained mixture is homogenised at a pressure of between 100 and 400 bar, preferably at a temperature above the melting point of the fat.

A further preferred process includes homogenisation of the mixture of step (e) before step (f), preferably at a pressure of between 100 and 400 bar, and preferably at a temperature above the melting point of the fat. Optionally the mixture of step (e) is homogenised before heating, which takes place in step (e).

Most preferably both homogenisation steps are included in the process. This means that homogenisation preferably takes place before and after the mixing in of biopolymer.

Heating in steps (b) and (e) takes place in order to ensure pasteurisation or sterilisation of the product, or to achieve protein denaturation. The heating conditions need not be the same in step (b) and (e). More complicated temperature profiles involving more heating and cooling steps throughout the process are possible as well. Preferably in both cases heating is carried out to a temperature above 60 °C, preferably from 70 to 100 °C.

Acidification may take place by microbiological or chemical acidification or a combination of both. In case the products are acidified microbiologically it is preferred that the cultures are made inactive after the acidification.
Furthermore in case of microbiological acidification it is preferred that after step (c) the composition is set to a temperature of from 5 to 50 °C.

After step (e) the products may be filled in containers either before or after including a cooling step (f) e.g. to a temperature of from 5 to 10 °C.

It is preferred to homogenize at a temperature above 60°C.

The homogenisation described above can be combined into one homogenisation step, which is either carried out before or after acidification. The separation in two homogenisation steps is preferred.

The creams produced by the process according to the invention are storage stable in that they show reduced syneresis compared to products obtained by a prior art process such as that disclosed in EP-A-540087 wherein biopolymer is added in step (a). These products show syneresis.

In another embodiment the invention regards a spoonable soured non-dairy cream comprising a dispersed oil phase and a continuous aqueous phase said cream comprising from 5 to 35 wt% fat, said fat being either a vegetable oil or marine oil or a combination thereof; from 0.05 to 15 wt% protein in the form of a protein phase, 0.01 to 3 wt% biopolymer, said cream having a pH value between 4.0 and 5.8, wherein the cream comprises a phase separated water phase comprising a biopolymer phase and a protein phase, wherein the phase volume of the biopolymer phase is from 10 to 60 vol% on total product volume.

In the products according to the invention the biopolymer is present in the form of a biopolymer phase. Preferably the volume fraction of the biopolymer phase is from 10 to 50 vol%, more preferred 10 to 40 vol%, even more preferred 20 to 40 vol%.

The concentration of biopolymer in the non-dairy cream according to the invention is from 0.01 to 3 wt%, preferably from 0.1 to 1.5 wt%. It will be appreciated that each individual biopolymer will have its own optimal concentration, which may depend on other characteristics of the food product such as the protein source, pH and salt content.

The composition of the biopolymer phase is such that the viscosity of the biopolymer phase is from 10 to 20 mPa.s at a shear rate of 100 s⁻¹ determined at 40 °C. It was found that an increased viscosity of the biopolymer phase generally was linked to an increased ability to reduce syneresis.

The protein is preferably selected from the group comprising milk protein, soy protein, pea protein or combinations thereof. The use of milk protein as at least part of the protein is highly preferred because of the positive effect of milk protein on the taste and flavour of the final product.

Suitable sources of milk protein are for example selected from the group comprising milk, skimmed milk or skim milk powder, butter milk or butter milk powder, butter serum powder, whey or whey powder, whey protein concentrate, whey protein isolate, caseinate or a combination thereof. The most preferred protein is protein originating from buttermilk because of its superb taste and flavour contribution.

The amount of protein is from 0.05 to 15 wt%, preferably from 2 to 10 wt%, more preferred from 2 to 6 wt%. In general the lowest possible protein concentration is most advantageous because of cost reasons.

The products according to the invention comprise from 5 to 35 wt% fat. Preferred products comprise 15 to 35 wt%, more preferred from 18 to 25 wt% fat.

The fat is either a vegetable oil or marine oil or a combination thereof. The fat is essentially free of dairy fat which implies that the level of dairy fat on total fat is preferably below 10 wt%, more preferred below 5 wt%, even more preferred below 1 wt%. This regards added dairy fat and does not include dairy fat derived from the other ingredients such as dairy fat included in milk powders.

The fat is preferably selected from the group comprising coconut oil, palm oil, olive oil, palm kernel oil, soybean oil, rapeseed oil, sunflower oil, safflower oil, or fully or partially hardened fractions thereof.

Optionally the fat is an interesterified fat blend. In a further preferred embodiment, the total amount of saturated fatty acid components in the fat is less than 45 wt%, based on the total amount of fatty acid components, and further preferred less than about 30 wt%.

Most preferably the solids content of the fat or fat blend that forms the dispersed fat phase is from 5 to 95% at 10°C, from 1 to 50% at 20 °C and from 0 to 10% at 35 °C. More preferred the solids content is from 25 to 75% at 10 °C, from 7.5 to 35% at 20 °C and from 0 to 5% at 35 °C. Most preferred the solids content is from 60 to 75% at 10 °C, from 10 to 35% at 20 °C and from 0 to 5% at 35 °C.

Without wishing to be bound by any theory, it is believed that in products according to the invention, the fat droplets are coated by protein and hence may mimic protein particles in many characteristics. When studied under a microscope, the products according to the invention preferably show a continuous aqueous phase in which fat droplets are dispersed in the form of fine droplets that are preferably at least partly coated with protein. Preferably at least 75 vol%, more preferred 90vol% of the fat droplets is in the protein phase. Optionally a small part of the fat droplets (preferably less than 10 vol%) is located at the interface between the protein phase and the biopolymer phase or in the biopolymer phase.

Optionally the products according to the invention comprise emulsifier. For the purpose of the invention the term emulsifier does not encompass protein. However very high amount of emulsifier are preferably avoided as this could lead to a change in texture in terms of the contribution of the fat droplets to consistency of the product, especially over the protein phase and the biopolymer phase. Preferably the amount of emulsifier is below 1 wt%, more preferred below 0.5 wt%. Suitable emulsifiers are for example monoglycerides (saturated or unsaturated), diglycerides, phospholipids such as lecithin.

Optionally, usual additives for emulsions such as salt, herbs, spices, flavours, colouring matter, preservatives, sweetener and the like may be added.

Normally, for use as a cream alternative at least some salt may optionally be present. The amount of salt may vary depending on the consumer preference in a specific country, but amounts up to 1.5 wt% are generally recommended. The preferred salt is sodium chloride.

The products have a pH of 4.0 to 5.8, preferably between 4.2 and 5.2, and most preferred between 4.2 and 4.6. Acidification of the starting ingredients to this pH can be obtained by any suitable method such as microbial acidification or chemical acidification for example using lactic acid, glucono deltalactone or another acidifying agent. The pH can be further adjusted by the use of a base such as sodium hydroxide.

For obtaining further improved mouthfeel, in one embodiment of this invention preferably some gelatin will be present. The product preferably comprises at least 0.5 wt% gelatin (based on total weight of the product), and further preferred at least 0.6 wit%.

The invention is illustrated in the following non-limiting example.

### Example

### General

### Method to determine syneresis

A sample of 200 g in tub was taken. Half of the product was taken out with a spoon. The product is put to a temperature of 25 °C for 4 hours and then for 20 hours at 5 °C. The water is removed and by weighing the sample both before and after water removal, the amount of syneresis is determined.

### Determination of phase separation

The product was poured in tubes that were centrifuged at 50°C for 2 h using a Gerber centrifuge at a speed, which corresponds to about 100 g force. Phase volumes for upper biopolymer-rich and lower protein-rich phase were quantified for each tube.

Products were prepared according to table 1

**Table 1 : Composition**

| **Ingredient** | **Wt % on product** |
|---|---|
| Fat | 20.0 |
| Skim milk powder | 10.0 |
| Guar gum | 0.1 |
| Pectin | 0.15 |
| Lactic acid (LA 88% pure) | 0.58 |
| Demineralised water | Up to 100% |

The fat type was sunflower oil.

### Process

Water phase and fat phase ingredients except for guar gum and acids were mixed at about 60 °C. After mixing the composition was pasteurized at 85°C for 10 minutes, and cooled down to 44°C, after which homogenisation at 200 bar took place. To the homogenized composition acid was added, until a pH of about 4.8 was reached. Subsequently guar gum was added, followed by heating the mixture to 85 °C. The obtained product was homogenized at 300 bar, and subsequently heated to a temperature of 75°C for filling small containers. The product was cooled down to below 10°C and stored at chill temperature.

### Result

The phase volume of the biopolymer phase was about 40 %.

The obtained product showed little to no syneresis under the storage conditions described above.

## Claims

1. Process for the preparation of a spoonable, soured non-dairy cream comprising from 5 to 35 wt% fat, from 0.05 to 15 wt% protein, 0.01 to 3 wt% biopolymer, said cream product having a pH value between 4.0 and 5.8 said process comprising the steps of
(a) preparation of an aqueous premix comprising at least protein and preferably fat
(b) heating the mixture obtained in step (a)
(c) acidification to a pH from 4.0 to 5.8
(d) mixing in of a biopolymer
(e) heating the mixture obtained in step (d)
(f) cooling to a temperature below 20 °C.

2. Process according to claim 1 wherein after step (a) or (b) the obtained mixture is homogenised at a pressure of between 100 and 400 bar, preferably at a temperature above the melting point of the fat.

3. Process according to any of claims 1-2 wherein the mixture of step (e) is homogenised before step (f), preferably at a pressure of between 100 and 400 bar, and preferably at a temperature above the melting point of the fat.

4. Process according to any of claims 1-3 wherein biopolymer is selected from the group comprising carrageenan, tara gum, guar gum, locust bean gum, gellan, alginate, methylcellulose, pectin, xanthan gum or a combination thereof.

5. Spoonable soured non-dairy cream comprising a dispersed oil phase and a continuous aqueous phase said cream comprising from 5 to 35 wt% fat, said fat being either a vegetable oil or marine oil or a combination thereof; from 0.05 to 15 wt% protein in the form of a protein phase, 0.01 to 3 wt% biopolymer, said cream having a pH value between 4.0 and 5.8, wherein the cream comprises a phase separated water phase comprising a biopolymer phase and a protein phase, wherein the phase volume of the biopolymer phase is from 10 to 60 vol% on total product volume, wherein the viscosity of the biopolymer phase is from 10 to 20 mPa.s at a shear rate of 100 s⁻¹ determined at 40 °C.

6. Spoonable soured non-dairy cream according to claim 5 wherein the phase volume of the biopolymer phase is from 10 to 40 vol%, preferably from 20 to 40 vol% on total product volume.

## Patentansprüche

1. Verfahren zur Herstellung einer löffelbaren, gesäuerten Creme, die nicht auf Molkereierzeugnissen basiert, umfassend 5 bis 35 Gew.-% Fett, 0,05 bis 15 Gew.-% Protein, 0,01 bis 3 Gew.-% Biopolymer, wobei das Cremeerzeugnis einen pH-Wert zwischen 4,0 und 5,8 hat und das besagte Verfahren die Schritte
(a) Herstellung einer wässrigen Vormischung, umfassend zumindest Protein und vorzugsweise Fett
(b) Erhitzen der in Schritt (a) erhaltenen Mischung
(c) Ansäuerung auf einen pH von 4,0 bis 5,8
(d) Beimischung eines Polymers
(e) Erhitzen der in Schritt (d) erhaltenen Mischung
(f) Abkühlen auf eine Temperatur unter 20°C
umfasst.

2. Verfahren nach Anspruch 1, **dadurch gekennzeichnet, dass** nach dem Schritt (a) oder (b) die erhaltene Mischung bei einem Druck von zwischen 100 und 400 bar, bevorzugt bei einer Temperatur oberhalb der Schmelztemperatur des Fetts homogenisiert wird.

3. Verfahren nach einem der Ansprüche 1 und 2, **dadurch gekennzeichnet, dass** die Mischung aus Schritt (e) vor dem Schritt (f) homogenisiert wird, bevorzugt bei einem Druck von zwischen 100 und 400 bar und bevorzugt bei einer Temperatur oberhalb der Schmelztemperatur des Fetts.

4. Verfahren nach einem der Ansprüche 1 bis 3, **dadurch gekennzeichnet, dass** das Biopolymer aus der Gruppe, umfassend Carrageenan, Taragummi, Guargummi, Johannisbrotkernmehl, Gellan, Alginat, Methylcellulose, Pektin, Xanthangummi oder einer Kombination davon ausgewählt ist.

5. Löffelbare gesäuerte Creme, die nicht auf Molkereierzeugnissen basiert, umfassend eine dispergierte Ölphase und eine kontinuierliche wässrige Phase, wobei die Creme 5 bis 35 Gew.-% Fett umfasst, das entweder ein pflanzliches Öl, ein Marineöl oder eine Kombination davon ist, weiterhin 0,05 bis 15 Gew.-% Protein in Form einer Proteinphase, 0,01 bis 3 Gew.-% Biopolymer, wobei die Creme einen pH-Wert von zwischen 4,0 und 5,8 hat, wobei die Creme eine phasengetrennte Wasserphase, die eine Biopolymerphase und eine Proteinphase umfasst, beinhaltet, wobei das Phasenvolumen der Biopolymerphase 10 bis 60 Vol.-% des gesamten Produktvolumens beträgt und wobei die Viskosität der Biopolymerphase bei einer Scherrate von 100 s⁻¹ gemessen bei 40 °C von 10 bis 20 mPa.s beträgt.

6. Löffelbare gesäuerte Creme, die nicht auf Molkereierzeugnissen basiert, nach Anspruch 5, **dadurch gekennzeichnet, dass** das Phasenvolumen der Biopolymerphase 10 bis 40 Vol.-%, bevorzugt 20 bis 40 Vol.-% des gesamten Produktvolumens beträgt.

## Revendications

1. Procédé de préparation d'une crème ne contenant pas de produits d'origine laitière cuillérable et acidifiée comprenant de 5 % à 35 % en poids de matière grasse, de 0,05 % à 15 % en poids de protéine, de 0,01 % à 3 % en poids de biopolymère, ledit produit crème présentant une valeur de pH de 4,0 à 5,8, ledit procédé comprenant les étapes suivantes :
(a) préparation d'un pré-mélange aqueux comprenant au moins une protéine et de préférence de la matière grasse
(b) chauffage du mélange obtenu lors de l'étape (a)
(c) acidification à un pH de 4,0 à 5,8
(d) incorporation d'un biopolymère par mélange
(e) chauffage du mélange obtenu lors de l'étape (d)
(f) refroidissement à une température inférieure à 20 °C.

2. Procédé selon la revendication 1 dans lequel après l'étape (a) ou (b) le mélange obtenu est homogénéisé à une pression de 100 à 400 bars, de préférence à une température supérieure au point de fusion de la matière grasse.

3. Procédé selon l'une quelconque des revendications 1 et 2 dans lequel le mélange de l'étape (e) est homogénéisé avant l'étape (f), de préférence à une pression de 100 à 400 bars, et de préférence à une température supérieure au point de fusion de la matière grasse.

4. Procédé selon l'une quelconque des revendications 1 à 3 dans lequel le biopolymère est choisi dans le groupe comprenant la carraghénine, la gomme de tara, la gomme de guar, la gomme de caroube, le gellane, l'alginate, la méthyl cellulose, la pectine, la gomme de xanthane ou une combinaison de ceux-ci.

5. Crème ne contenant pas de produit d'origine laitière acidifiée et cuillérable comprenant une phase huileuse dispersée et une phase aqueuse continue ladite crème comprenant de 5 % à 35 % en poids de matière grasse, ladite matière grasse étant soit une huile végétale soit une huile de poisson soit une combinaison de celles-ci ; de 0,05 % à 15 % en poids de protéine sous la forme d'une phase protéinique, de 0,01 % à 3 % en poids de biopolymère, ladite crème ayant une valeur de pH de 4,0 à 5,8, dans laquelle la crème comprend une phase aqueuse séparée de la phase comprenant une phase biopolymère et une phase protéinique, dans laquelle le volume de phase de la phase biopolymère est de 10 % à 60 % en volume par rapport au volume total du produit, dans laquelle la viscosité de la phase biopolymère est de 10 à 20 mPa.s à un taux de cisaillement de 100 s⁻¹ déterminée à 40 °C.

6. Crème ne contenant pas de produit d'origine laitière acidifiée et cuillérable selon la revendication 5 dans laquelle le volume de phase de la phase biopolymère est de 10 % à 40 % en volume, de préférence de 20 % à 40 % en volume par rapport au volume total du produit.
